Europäisches Patentamt

European Patent Office

Office européen des brevets

(11) Veröffentlichungsnummer: **0 258 208 B1**

(12) **EUROPÄISCHE PATENTSCHRIFT**

(45) Veröffentlichungstag der Patentschrift:
16.05.90

(51) Int. Cl.⁵: **C21B 13/00**, C21B 13/14, C21C 5/56, C10K 1/32

(21) Anmeldenummer: 87890181.8

(22) Anmeldetag: 30.07.87

(54) Hüttenwerk sowie Verfahren zum Betrieb eines solchen Hüttenwerkes.

(30) Priorität: 07.08.86 AT 2139/86

(43) Veröffentlichungstag der Anmeldung:
02.03.88 Patentblatt 88/9

(45) Bekanntmachung des Hinweises auf die Patenterteilung:
16.05.90 Patentblatt 90/20

(84) Benannte Vertragsstaaten:
BE CH DE FR GB IT LI LU NL SE

(56) Entgegenhaltungen:
DE-A- 2 112 369
DE-A- 3 308 304
FR-A- 2 362 789

STAHL UND EISEN, Band 95, Nr. 3, 30. Januar 1975, Seiten 91-99, Düsseldorf, DE; H.-G. PÖTTKEN et al.: "Auswirkung der Struktur eines Unternehmens auf seine Energiewirtschaft unter besonderer Berücksichtigung der Energieausnutzung"

(73) Patentinhaber: VOEST-ALPINE INDUSTRIEANLAGENBAU GESELLSCHAFT m b.H.,
Turmstrasse 44, A-4020 Linz(AT)

(72) Erfinder: Pusch, Hermann, Dipl.-Ing., Helmhartweg 5,
A-4060 Leonding(AT)
Erfinder: Zeller, Siegfried, Dipl.-Ing., Josef-Scheu-Weg 4,
A-4020 Linz(AT)
Erfinder: Milionis, Konstantin, Dipl.-Ing., Idlhofgasse 80,
A-8020 Graz(AT)
Erfinder: Kresl, Hans, Ing., Regerstrasse 31,
A-4020 Linz(AT)

(74) Vertreter: Wolfram, Gustav, Dipl.-Ing.,
Schwindgasse 7 P.O. Box 205, A-1041 Wien(AT)

## Beschreibung

Die Erfindung betrifft ein Hüttenwerk zur Erzeugung von Stahl aus flüssigen und festen Einsatzstoffen, umfassend eine Kokerei, eine Hochofenanlage, ein Konverterstahlwerk und eine Anlage zur Direktreduktion von Eisenerz, wobei das Konverterstahlwerk einerseits durch flüssiges Roheisen aus der Hochofenanlage und Schrott und andererseits durch Eisenschwamm aus der Direktreduktionsanlage beschickt wird, eine Mischeinrichtung für diskontinuierlich anfallendes Konverterabgas, für Topgas aus der Direktreduktionsanlage und für Koksofengas zur Bildung von Reduktionsgas, sowie ein Verfahren zu dessen Betrieb.

In konventionellen Hüttenwerken, die Stahl in Blasstahlkonvertern durch Auf- und/oder Einblasen von Sauerstoff auf oder in flüssiges Roheisen erzeugen, wird das Roheisen in Hochöfen unter Einsatz von Erzen und hochwertigem Koks hergestellt. Da die Roheisenerzeugung in großen Hochöfen am wirtschaftlichsten ist, geht die Entwicklung in Richtung von Hochöfen mit höchster Leistung, die über möglichst lange Zeiträume ohne Unterbrechung betrieben werden müssen. Bei Verwendung derartiger Hochöfen müssen stahlwerksseitig große Roheisenmengen abgenommen werden, d.h. es ist eine Mehrzahl von Blasstahlkonvertern mit ebenfalls hoher Leistung erforderlich, um das Roheisen aufzuarbeiten. Eine Speicherung des erzeugten flüssigen Roheisens ist nur bedingt möglich. Ein Vergießen von flüssigem Roheisen zu Masseln bei stahlwerksseitigen Unterbrechungen bzw. Betriebsstörungen ist unwirtschaftlich.

In konventionellen Hüttenwerken wird in den Blasstahlkonvertern vorwiegend Stahlschrott als Kühlmittel eingesetzt. Die Verwendung von Schrott stellt den Stahlwerker vor Probleme, wenn der Schrott zugekauft wird und seine genaue Zusammensetzung nicht bekannt ist. Mit solchem Schrott werden oftmals unerwünschte Begleitelemente in die Metallschmelze eingebracht, welche im Frischverfahren nicht mehr entfernt werden können.

Um Schwierigkeiten dieser Art zu vermeiden, ist der Vorschlag gemacht worden, in das Hüttenwerk eine Direktreduktionsanlage zu integrieren, wobei der anfallende Eisenschwamm teils als Kühlmittel in dem bzw. den Konvertern und teils als Festeinsatz in anderen Einschmelzaggregaten zum Einsatz kommt und wobei das Reduktionsgas für die Direktreduktionsanlage aus Konverterabgasen, Koksofengas und Topgas aus der Direktreduktionsanlage zusammengesetzt wird. Dabei hat sich jedoch als Nachteil herausgestellt, daß die Zumischung von Koksofengas begrenzt ist, weil das Koksofengas erhebliche Gehalte an Kohlenwasserstoffen, insbesondere Methan aufweist, die im Reduktionsschacht der Direktreduktionsanlage die Bildung von freiem Kohlenstoff verursachen. Die Kohlenstoffabscheidung hat eine schlechte Durchgasung im Schachtofen zur Folge und beeinträchtigt die Brikettiereigenschaften des Reduktionsproduktes. Außerdem ist der Methanzerfall endotherm und verursacht eine Abkühlung.

Die Erfindung bezweckt die Vermeidung dieser Nachteile und Schwierigkeiten und stellt sich die Aufgabe, bei einem Hüttenwerk der eingangs bezeichneten Art bzw. bei einem Verfahren zu dessen Betrieb die Eigenschaften des Reduktionsgases zu verbessern und die Bildung von Kohlenstoffabscheidungen in der Direktreduktionsanlage zu vermeiden. Außerdem sollen nach einem weiteren Aspekt der Erfindung Verunreinigungen, wie Schwefel, die entweder mit dem Eisenschwamm in den Stahl eingebracht werden oder mit schwefelhältigen Abgasen die Umwelt belasten, weitgehend vermieden werden.

Diese Aufgaben werden erfindungsgemäß dadurch gelöst, daß in der Koksofengaszuführung eine Fraktionierungseinrichtung zur Gewinnung eines wasserstoffreichen Gases und gegebenenfalls eine Entschwefelungseinrichtung angeordnet sind.

Das Verfahren zum Betrieb eines Hüttenwerkes gemäß der Erfindung, wobei der bzw. die Konverter des Konverterstahlwerkes mit flüssigem Roheisen aus der Hochofenanlage und mit Eisenschwamm aus der Direktreduktionsanlage beschickt wird bzw. werden und das Reduktionsgas für die Direktreduktionsanlage aus Konverterabgas, Topgas und Koksofengas zusammengesetzt wird, ist dadurch gekennzeichnet, daß der Koksofengasanteil zumindest teilweise entschwefelt und zur Erhöhung seines Wasserstoffgehaltes fraktioniert wird.

Vorzugsweise wird zur Fraktionierung des Koksofengases ein Druckwechsel-Adsorptionsprozeß (DWA) eingesetzt.

Druckwechsel-Adsorptionsverfahren sind an sich bekannt. Sie beruhen darauf, daß hochflüchtige Komponenten niedriger Polarität, wie Wasserstoff, im Gegensatz zu Gasmolekülen, wie $CO_2$ und Kohlenwasserstoffe, nicht adsorbierbar sind. Die Adsorption unerwünschter Verunreinigungen findet vorzugsweise bei hohem Druck statt, woraus sich eine hohe Beladung der zu adsorbierenden Verunreinigungen auf dem Adsorbens ergibt. Die Desorption bzw. Regenerierung wird bei niedrigem Druck ausgeführt. Der Prozeß arbeitet bei Umgebungstemperatur, d.h. es wird keine Wärme zur Regenerierung benötigt.

Die Erfindung wird im beiliegenden Blockschema näher erläutert:

Im Hochofen 1 erzeugtes Roheisen 2 wird als Flüssigeinsatz in den Stahlwerkskonverter 3 chargiert. Dieser Konverter kann als LD-Aufblaskonverter oder als kombinierter Aufblas-Bodenblas-Konverter mit oder ohne Zufuhr von Wärmeträgern ausgebildet sein.

Im Hüttenwerk sind des weiteren die mit 4 angedeutete Kokerei und die mit 5 bezeichnete Direktreduktionsanlage, zweckmäßig ein Direktreduktionsschachtofen, integriert. Der Direktreduktionsschachtofen wird mit Eisenerz 6 chargiert und daraus heißbrikettierter Eisenschwamm 7 erzeugt. Dieser wird über die Fördereinrichtung 8 dem Konverter als fester Einsatz zugeführt. Ein Teil kann auch über die Fördereinrichtung 9 einem Elektrolichtbogenofen 10 zu einer weiteren Verarbeitung zugeführt werden.

Konverterabgas wird diskontinuierlich über die Leitung 11 entnommen, im Wäscher 12 gewaschen, gekühlt und im Gasspeicher 13 gesammelt. Aus dem Speicher 13 wird das Gas kontinuierlich der Mischstation 14 zugeführt, wo es mit dem aus der Direktreduktionsanlage kommenden Topgas 15 gemischt wird. In der Leitung 15 kann eine Wascheinrichtung 16 vorgesehen sein.

Das aus Topgas und Konverterabgas gebildete Mischgas wird über den Verdichter 17 einer $CO_2$-Waschanlage 18 zugeführt.

Das aus der Kokerei kommende Koksofengas wird über die Leitung 19 und einen Verdichter 20 zu der Entschwefelungsanlage 21 geleitet. Diese kann als Waschturm mit naßchemischer Entschwefelung ausgebildet sein. Das Koksofengas wird über einen weiteren Verdichter 22 der Fraktionierungseinrichtung 23 zugeführt, die vorzugsweise als Adsorberbatterie nach dem Druckwechsel-Adsorptionsprozeß ausgebildet ist.

Das fraktionierte Koksofengas wird über die Leitung 24 abgenommen und in der Mischstation 25 mit dem aus dem Wäscher 18 kommenden, aus Konverterabgas und Topgas 15 bestehenden Gasstrom gemischt. Aus dem Wäscher 18 wird $CO_2$-hältiges schwefelfreies Abgas über die Leitung 26 entfernt. Das in der Mischstation 25 mit dem fraktionierten Koksofengas hergestellte Reduktionsgas wird in dem Vorwärmer 27 vorgewärmt und sodann über die Leitung 28 in den Reduktionsschachtofen eingeführt.

Der Vorerhitzer kann mit Topgas aus der Leitung 29, die aus dem Wäscher 16 abzweigt, und gegebenenfalls mit $CH_4$-reichem Gas aus der Leitung 30, die aus der Fraktionierungseinrichtung kommt, betrieben werden. Überschüssiges $CH_4$-reiches Gas wird anderen Verbrauchern zugeführt. Mit 31 ist eine Mischstation bezeichnet, mit 32 ein Luftverdichter und mit 33 der Abzugskamin.

Ein typisches Ausführungsbeispiel bei Verwendung des erfindungsgemäßen Verfahrens ist das folgende:

Bei einem integrierten Hüttenwerk der erfindungsgemäßen Art kann der Materialfluß etwa wie folgt sein:

Ein Hochofen produziert 431 t Roheisen/h folgender Zusammensetzung: 4,73 % C, 0,60 % Si, 0,69 % Mn, 0,11 % P, 0,04 % S, 93,83 % Fe.

Drei Stahlwerkskonverter mit einer Kapazität von je 180 t werden mit einem Einsatz von 431 t Roheisen/h, 78,8 t Schrott/h und 65 t heißbrikettiertem Eisenschwamm/h folgender Zusammensetzung: 86,50 % Fe (metallisch), 1,2 % C, 0,015 % S, 0,04 % P, 3,80 % Gangart, 93 % Fe (gesamt), 93 % Metallisierungsgrad beschickt; das Verhältnis Flüssig- zu Festeinsatz beträgt 3 : 1. Es werden 505 t Rohstahl/h mit folgender Zusammensetzung: 0,03 % C, 0,25 % Mn, 0,025 % P, 0,020 % S, 0,0 % Si erzeugt.

Überschüssiger heißbrikettierter Eisenschwamm wird in einem Elektroofen ebenfalls in Stahl umgewandelt.

Das aus dem Konverter kommende Abgas hat die folgende Zusammensetzung: 64,5 % CO, 18,4 % $CO_2$, 0,7 % $H_2$, 16,4 % $N_2$. Es wird in einer Menge von 40.404 Nm³/h mit Topgas in einer Menge von 91.500 Nm³/h und der folgenden Zusammensetzung: 25 % CO, 20 % $CO_2$, 22,5 % $H_2$, 3 % $H_2O$, 30 % $N_2$ gemischt. Koksofengas mit einer Zusammensetzung von 6,21 % CO, 1,87 % $CO_2$, 60,26 % $H_2$, 2,77 % höher Kohlenwasserstoffe, 0,1 % $O_2$, 25,82 % $CH_4$, 2,97 % $N_2$ in einer Menge von 55.613 Nm³/h wird in der Entschwefelungsanlage entschwefelt, wobei der Schwefelgehalt von 0,1 % auf 30 ppm herabgesetzt wird und sodann in der Fraktionierungsanlage fraktioniert.

Der Wasserstoffgehalt beträgt vor der Fraktionierung 60,26 % und nach der Fraktionierung 99,9 %.

Das in der Mischstation 25 zusammengesetzte Reduktionsgas hat die folgende Zusammensetzung: 36 % CO, 1,9 % $CO_2$, 35 % $H_2$, 2,5 % $H_2O$, 24,6 % $N_2$. Es wird in einer Menge von 136.500 Nm³/h dem Reduktionsschachtofen zugesetzt.

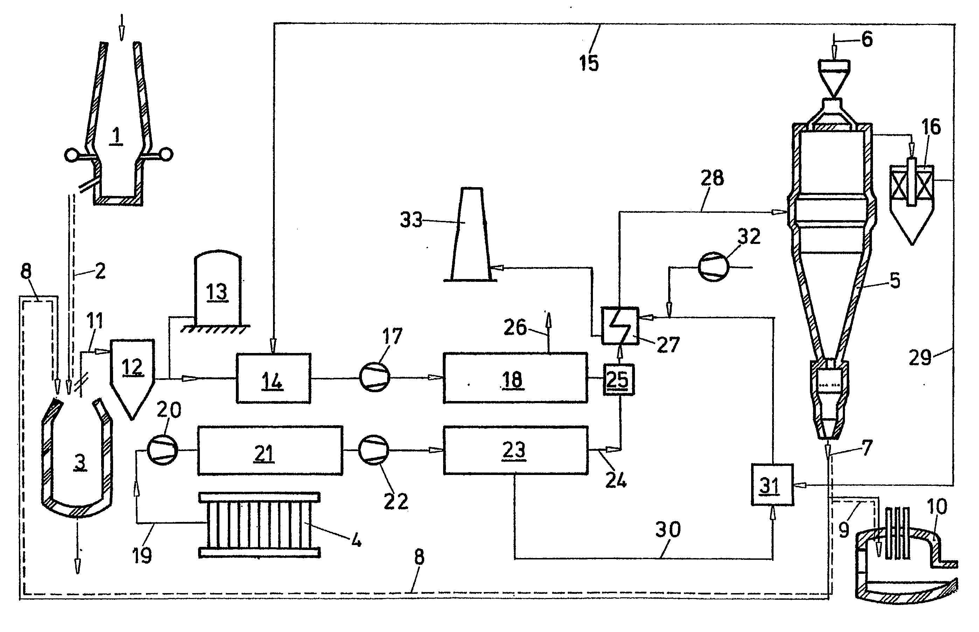

## Patentansprüche

1. Hüttenwerk zur Erzeugung von Stahl aus flüssigen und festen Einsatzstoffen, umfassend eine Kokerei (4), eine Hochofenanlage (1), ein Konverterstahlwerk (3) und eine Anlage (5) zur Direktreduktion von Eisenerz (6), wobei das Konverterstahlwerk (3) einerseits durch flüssiges Roheisen aus der Hochofenanlage (1) und Schrott und andererseits durch Eisenschwamm (7) aus der Direktreduktionsanlage (5) beschickt wird, eine Mischeinrichtung für diskontinuierlich anfallendes Konverterabgas, für Topgas aus der Direktreduktionsanlage und für Koksofengas zur Bildung von Reduktionsgas, dadurch gekennzeichnet, daß in der Koksofengaszuführung eine Fraktionierungseinrichtung (23) zur Gewinnung eines wasserstoffreichen Gases und gegebenenfalls eine Entschwefelungseinrichtung (21) angeordnet sind.

2. Verfahren zur Erzeugung von Stahl in einem Hüttenwerk nach Anspruch 1, wobei der bzw. die Konverter (3) des Konverterstahlwerkes mit flüssigem Roheisen aus der Hochofenanlage (1) und mit Eisenschwamm (7) aus der Direktreduktionsanlage (5) beschickt wird bzw. werden und das Reduktionsgas für die Direktreduktionsanlage aus Konverterabgas, Topgas (15) und Koksofengas zusammengesetzt wird, dadurch gekennzeichnet, daß der Koksofengasanteil zumindest teilweise entschwefelt und zur Erhöhung seines Wasserstoffgehaltes fraktioniert wird.

3. Verfahren nach Anspruch 2, dadurch gekennzeichnet, daß zur Fraktionierung des Koksofengases ein Druckwechsel-Adsorptionsprozeß (DWA) eingesetzt wird.

## Claims

1. Mill arrangement for producing steel from liquid and solid charging materials, comprising a coking plant (4), a blast furnace plant (1), a converter steelworks (3), and a plant (5) for the direct reduction of iron ore (6), the converter steelworks (3) being charged, on the one hand, by molten pig iron from the blast furnace plant (1) and scrap and, on the other hand, by sponge iron (7) from the direct reduction plant (5), a mixing means for discontinuously occurring converter offgas, for top gas from the direct reduction plant and for coke oven gas for the formation of reduction gas, characterised in that, in the coke oven gas supply means, a fractionation means (23) for the recovery of a hydrogen-rich gas and optionally a desulfurisation means (21) are arranged.

2. Method of producing steel in a mill arrangement according to claim 1, wherein the converter(s) (3) of the converter steelworks is (are) charged with molten pig iron from the blast furnace plant (1) and with sponge iron (7) from the direct reduction plant (5) and the reduction gas for the direct reduction plant is composed of converter offgas, top gas (15) and coke oven gas, characterised in that the portion of coke oven gas is at least partly desulfurised and fractionated for increasing its hydrogen content.

3. Method according to claim 2, characterised in that for the fractionation of the coke oven gas an alternating pressure adsorption process (DWA) is employed.

**Revendications**

1. Usine sidérurgique intégrée pour produire de l'acier à partir de matières de charge liquides et solides, comprenant une cokerie (4), une installation de haut fourneau (1), une aciérie à convertisseur (3) et une installation (5) de réduction directe de minerai de fer (6), l'aciérie à convertisseur (3) étant chargée d'une part avec de la fonte brute liquide venant de l'installation de haut fourneau (1) et avec de la ferraille, et d'autre part avec de l'éponge de fer (7) provenant de l'installation de réduction directe (5), un dispositif mélangeur pour du gaz de convertisseur arrivant de manière discontinue, pour du gaz de gueulard provenant de l'installation de réduction directe et pour du gaz de four à coke, pour former du gaz de réduction, caractérisée par le fait qu'un dispositif de fractionnement (23) pour l'obtention d'un gaz riche en hydrogène, et éventuellement un dispositif de désulfuration (21), sont agencés dans l'amenée de gaz de four à coke.

2. Procédé pour produire de l'acier dans une usine sidérurgique intégrée selon revendication 1, dans lequel le ou les convertisseurs (3) de l'aciérie à convertisseur est ou sont chargés avec de la fonte brute liquide provenant de l'installation de haut fourneau (1) et avec de l'éponge de fer (7) provenant de l'installation de réduction directe (5), et le gaz de réduction pour l'installation de réduction directe est composé de gaz venant du ou des convertisseurs, de gaz de gueulard (15) et de gaz de four à coke, caractérisé par le fait que la composante gazeuse venant du four à coke est au moins partiellement désulfurée et, pour accroître sa teneur en hydrogène, est fractionnée.

3. Procédé selon revendication 2, caractérisé par le fait que, pour le fractionnement du gaz de four à coke, on recourt à un processus d'absorption avec variation de pression (DWA).